(19) Europäisches Patentamt

European Patent Office

Office européen des brevets

(11) **EP 0 422 220 B1**

(12) **EUROPEAN PATENT SPECIFICATION**

(45) Date of publication and mention
of the grant of the patent:
**03.07.1996 Bulletin 1996/27**

(21) Application number: **89903812.9**

(22) Date of filing: **28.03.1989**

(51) Int Cl.6: **G06T 5/00**, A61B 6/03

(86) International application number:
**PCT/JP89/00327**

(87) International publication number:
**WO 90/11050 (04.10.1990 Gazette 1990/23)**

(54) **IMAGE PROCESSING APPARATUS**

BILDVERARBEITUNGSGERÄT

APPAREIL DE TRAITEMENT D'IMAGES

(84) Designated Contracting States:
**DE FR GB NL**

(43) Date of publication of application:
**17.04.1991 Bulletin 1991/16**

(73) Proprietor: **YOKOGAWA MEDICAL SYSTEMS, LTD**
**Hino-shi, Tokyo 191 (JP)**

(72) Inventor: **SAIKI, Kazunori**
**Tama-shi Tokyo 206 (JP)**

(74) Representative: **Henkel, Feiler, Hänzel & Partner**
**Möhlstrasse 37**
**81675 München (DE)**

(56) References cited:
EP-A- 0 088 935          JP-A- 6 249 832
JP-A-62 179 435          JP-A-62 179 436

- PATENT ABSTRACTS OF JAPAN vol. 13, no. 293 (C-615)(3641) 6 July 1989 & JP-A-1 086 942
- MEDICAL PHYSICS vol. 14, no. 2, March 1987, NEW YORK, US pages 238 - 243; W. JASCHKE ET AL.: 'Flow measurements with a high-speed computed tomography scanner'
- MEDICAL PROGRESS THROUGH TECHNOLOGY. vol. 6, no. 1, 1978, BERLIN DE pages 23 - 28; K.H. HÖHNE ET AL.: 'Computer angiography: A new tool for X-ray functional diagnostics'

## Description

(Technical Field)

The present invention relates to an image processor in which gamma function curves are set which approximate to curves showing the movement of a contrast medium on a tomogram image taken by a tomograph and various characteristics of the set gamma function curves are constituted as a computer image.

(Background Art)

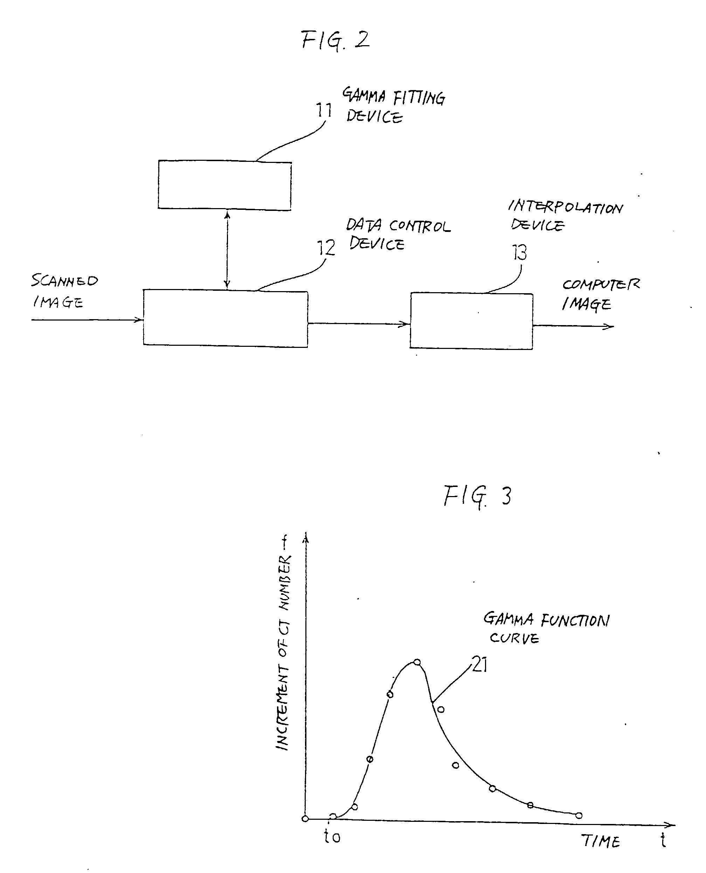

A tomograph is a device for obtaining a tomogram image of a subject body based on X-ray transmission data obtained by irradiating the subject from its surroundings with X rays. As one of the techniques of tomography there is a method for diagnosis of a morbid part as shown in the following: a water-soluble contrast medium is injected into a vein and an image of a blood vessel or an internal organ, etc. which changes with the lapse of time are observed. The time serial measurement data of a certain point or a part of concern in a tomogram image are said to form a gamma function curve as shown in Fig. 3 when a time axis is taken as the axis of abscissas and the change ina CT number is taken as the axis of ordinates, therefore it is necessary to set a gamma function which approximates most precisely to the measurement data (hereinafter referred to as gamma fitting). In Fig. 3, the points shown with small circles express the data of an identical point on tomogram images obtained in respective times (on respective slices), and they are connected with a gamma function curve 21 which approximates most precisely to the time serial change of the measurement data. The gamma function is expressed in equation (1).

$$f=K\,(t-t_o)^{\alpha}\,\exp\,\{-\beta(t-t_o)\} \tag{1}$$

As a method for gamma fitting, there is a method in which parameters for making an error minimum is found out asymptotically with a grid search method, etc., or a method in which the gamma function is brought into a normal equation by transforming the gamma function into another function, for example, a logarithmic function. In the former case, that is, in an asymptotic method a great many calculations are needed and moreover the solution can not be always obtained. In the latter case, that is, in a transformation method to a logarithmic function, there are too large errors for practical use in the area where values of data are small. Therefore, it is difficult to perform accurate gamma fitting with a small amount of calculations, and it was not possible to obtain a high quality computer image using the gamma function curves.

The prior art document EP-A-0 088 935 discloses an image processor provided with a gamma fitting means for setting a gamma function curve approximating to a curve showing the movement of a contrast medium in a tomogram image obtained by a tomograph and for constituting various characteristics of the set gamma function curve with respect to a computer image, comprising: data clip means (DVP 73) for manipulating data, logarithmic transformation means (look-up table), weighting means for weighting images, disturbance removal means (adder and memory) for removing disturbance data and function decision means for setting an approximate gamma function curve.

(Disclosure of the Invention)

An object of the present invention is to realize an image processor in which an amount of calculation for gamma fitting is increased, a gamma fitting of high precision is performed in a short time and a computer image of high quality can be formed.

According to the present invention there is provided an image processor as defined in claim 1. A further embodiment of the invention is disclosed in claim 2.

An image processor according to the present invention functions as shown in the following: the amount of calculations for gamma fitting is decreased by transforming a gamma function to a first degree equation through logarithmic transformation; the accuracy of gamma fitting is improved by weighting measurement data transformed to a logarithmic function, and by removing disturbance in the measurement data; a smooth computer image can be formed by operating computer image data from gamma function curves which are fitted to respective picture elements, and by interpolating the data for incalculable picture elements.

(Brief Description of the Drawings)

Fig. 1 is a conceptual block diagram of an embodiment of a gamma fitting device to be used for an image processor according to the present invention;
Fig. 2 is a conceptual block diagram of an embodiment of an image processor according to the present invention;

Fig. 3 is a graph showing a gamma function curve which is approximate to measurement data;
Fig. 4 is a graph showing an example of input data to a gamma fitting device;
Fig. 5 is an illustrative representation of coordinate transformation by a data clip device;
Fig. 6 is a graph showing a relational curve between a real space and a logarithmic space;
Fig. 7 is a graph showing input data containing disturbance; and
Fig. 8 is an illustrative representation of a method for deciding $t_o$.

(Most Preferred Configuration for Executing the Invention)

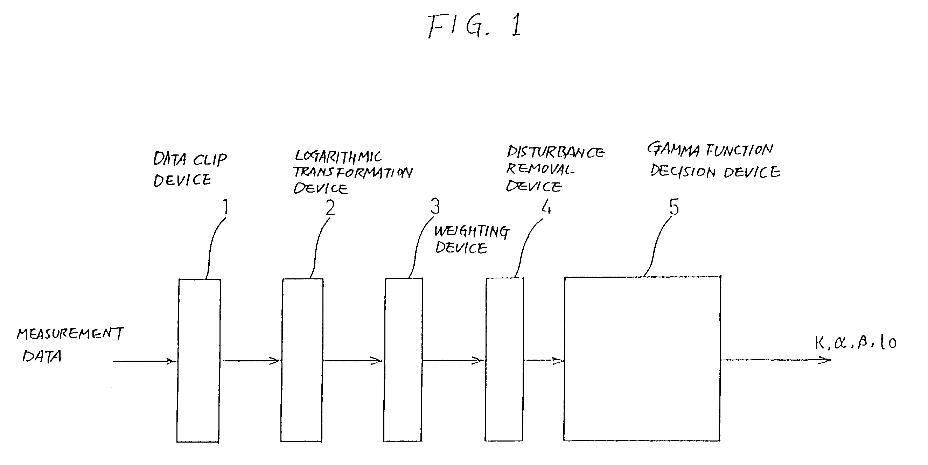

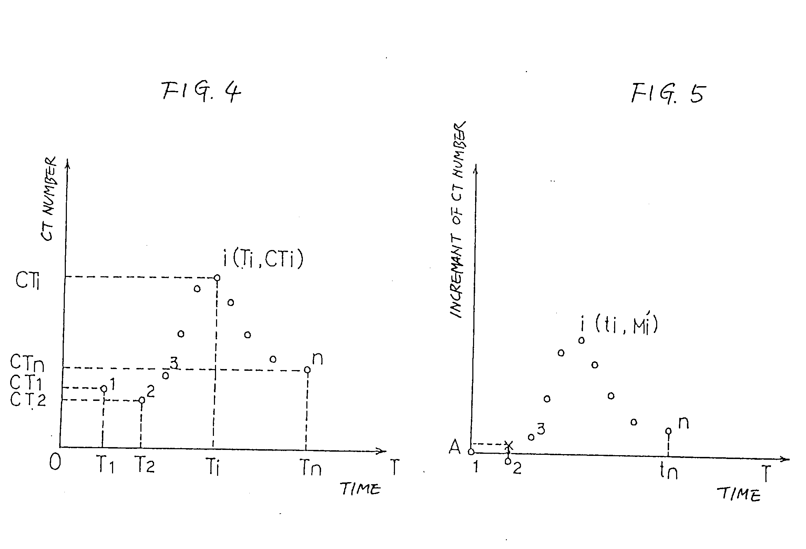

In Fig. 1, 1 is a data clip device which replaces a datum having a negative CT number to that having a positive number close to zero when the time serial measurement data of a certain point or a part of concern on a plurality of tomogram images obtained by slicing in a plurality of times of scans are transformed to the data in a coordinate system which is based on the time and the CT number of the leading data. The data clip device processes input data as shown below. An example of input data is shown in Fig. 4, and the process for the data will be explained. Each point in the figure is plotted based on the data obtained by slicing at each point of time. The numbers attached to the data are data numbers, and data 1 express the data of CT number CT1 obtained at a time T1 in the first slicing, and data i express the data of CT number CTi obtained at a time Ti in the No. i slicing. The data clip 1 transforms the data shown in Fig. 4 for gamma fitting to the data in a coordinate system based on the time T1 and the CT number CT1 of data 1, a leading data, that is, the data just before the arrival of a contrast medium. The coordinate-transformed data are shown in Fig. 5. In the graph shown in Fig. 5, the increment of the CT number of data 2 is negative, so that the data clip device 1 replaces the negative value with a certain value A close to zero which is set beforehand (A > 0). The coordinate transformation is, therefore performed as shown in equation (2).

$$(T_i, CT_i) \rightarrow (t_i, M_i') \tag{2}$$

where

$$t_i = T_i - T_1$$
$$M_i' = CT_i - CT_1 \qquad (\text{when } CT_i - CT_1 \geq A)$$
$$= A \qquad (\text{when } CT_i - CT_1 < A)$$

A part 2 is a logarithmic transformation device which sustains an expression of a gamma function in equation (1) in the form of a first degree equation being transformed to a logarithmic function, and transforms the output data of the data clip device 1 to a logarithmic function and substitutes them successively for the coefficients in equation (1). The device sustains the expression of gamma function in equation (1) in the form of a three element first degree equation being transformed to a logarithmic function as shown in equation (3).

$$M = ax + by + cz \tag{3}$$

where

$$M = \log \cdot f$$
$$x = \log \cdot K$$
$$y = \alpha$$
$$z = \beta$$
$$a = 1$$
$$b = \log \cdot (t - t_o) \quad (\text{Hereinafter abbreviate log}_e \text{ as log})$$
$$c = -(t - t_o)$$

In the data clip device 1, the respective values M1, b1 and c1 in equation (3) are given by the coordinate-transformed output data (t1, M1'). Therefore, equation (4) is obtained from equation (3). A proper value is applied to t0 until the value of it is decided later.

$$x + b_1 y + c_1 z - M_1 = 0 \tag{4}$$

A part 3 is a weighting device to make the accuracy of gamma fitting in a logarithmic space equivalent to the accuracy of gamma fitting in a real space. Even if gamma fitting is performed by the output data of the logarithmic transformation device 2, it is a phenomenon in the logarithmic space, and the fitting is largely influenced by the measurement data of small values, therefore the accuracy for approximation in the real space is degraded. The object of the weighting device 3 is to improve the above-mentioned problem. Let ei' be the residual at a measurement point i, when the left side of equation (4) does not become zero. In general for gamma fitting the values of x, y and z which make the square value sum of ei's minimum are to be found as shown in equation (5).

$$\sum_{i=1}^{n} e_i'^2 = \sum_{i=1}^{n} (x + b_i\, y + c_i\, z - M_i)^2 \qquad \cdots (5)$$

Since the evaluation of equation (5) is made concerning a logarithmic space, in the present invention to improve the fitting accuracy in a real space, equation (5) is evaluated by a weighting function w1, a function of M1.

$$\sum_{i=1}^{n} e_i^2 = \sum_{i=1}^{n} (w_i\, e_i')^2$$

$$= \sum_{i=1}^{n} \{ (x + b_i\, y + c_i\, z - M_i)\, w_i \}^2 \qquad \cdots (6)$$

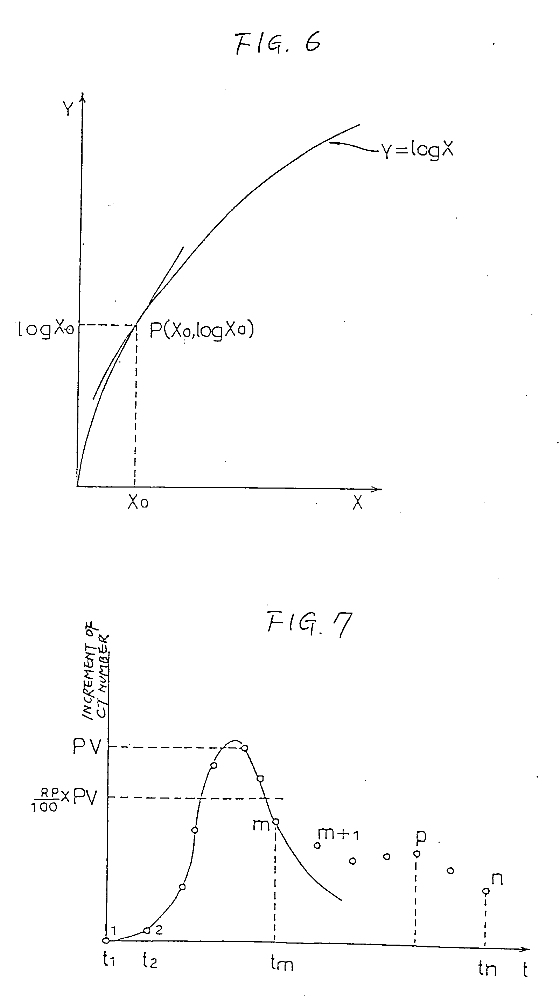

A lot of things can be considered about the above-mentioned weighting function w1, but an example of them will be explained referring to Fig. 6. In comparison with a data set X in a real space, consideration is made on the log X which is obtained by logarithmic transformation of the data set X. Fig. 6 is a graph showing a curve of $Y = \log X$ corresponding to the data X in a real space. In the figure, let (X0, logX0) be the coordinates of P, then the change sensitivity in the ordinate Y for the change in the abscissa X of data P can be expressed by a differential coefficient 1/X0 at point P on the curve log X. Therefore, it is made possible to obtain gamma fitting which is not influenced by nonlinearity generated in logarithmic transformation for an arbitrary data X by multiplying the reciprocal of a differential coefficient by the residual in a logarithmic space. Because of this, in the case of transformation to a logarithmic space, the weighting function w (X) can be decided to be $w(X) = 1/(1/X) = X$. Let w1 in equation (6) be $w1 = M1'$ and let the expression be sustained in the weighting device 3, and by substituting input data t1, N1' successively, the gamma fitting equivalent to that in a real space can be obtained. Therefore, the equation corrected by the weighting function becomes the one just as shown in equation (7).

$$\sum_{i=1}^{n} e_i^2 = \sum_{i=1}^{n} \{ (x + b_i\, y + c_i\, z - M_i)\, M_i' \}^2 \qquad \cdots (7)$$

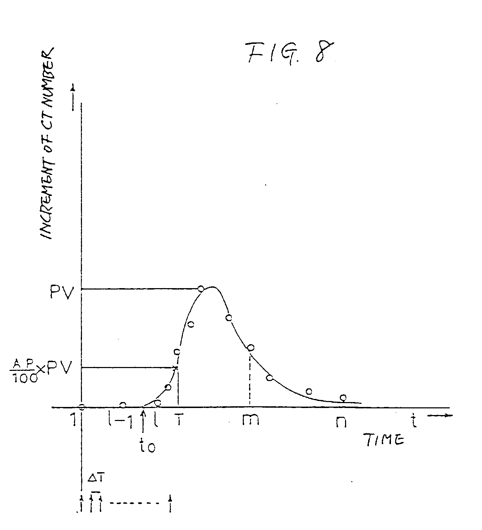

A part 4 is a disturbance removal device for removing data errors in the weighted slice data from the weighting device 3 caused by disturbances such as the ones in which a secondary peak is generated at the trailing edge of a curve or the trailing edge of the curve is blunted as shown in Fig. 7 caused by the influence of blood re-circulation etc. In Fig. 7, (1, 2, 3, --- m ---p --- n) are measurement data, and the data m + 1 are the data of which trailing edge is blunted and data P are the data showing a secondary peak. The curve connecting measurement data shows the curve of a gamma function to be found, and the data m + 1, the data P, etc. are regarded to be the data which do not show original correct values because of disturbances. In the disturbance removal device 4, the percentage value RP for a peak value PV which appears in the measurement data is set beforehand. The measurement data m of the slice which fall smaller than (RP/100) x PV (peak value) for the first time will be found and the measurement data m are made to be the final data to be used for gamma fitting. The disturbance removal device 4 transforms equation (7) to equation (8).

$$E = \sum_{i=1}^{m} \{ (x + b_i\, y + c_i\, z - M_i)\, M_i' \}^2 \qquad \cdots (8)$$

where

m = final data to be used for gamma fitting
E = square value sum of residual to be evaluated

A part 5 is a gamma function decision device for deciding a gamma function by finding the value of a variable which makes the square value sum E of the residuals in equation (8) obtained in the disturbance removal device 4 minimum. It performs operation as shown below. From equation (8), normal equations are obtained in which partial differential coefficients are put equal to zero as shown in the following.

$$\frac{\partial}{\partial x} E = 0$$

$$\frac{\partial}{\partial y} E = 0$$

$$\frac{\partial}{\partial z} E = 0$$

These simultaneous equations are expressed as shown in equation (9).

$$\mathbb{A} \mathbb{X} = \mathbb{B} \qquad \cdots (9)$$

Besides x, y and z, another parameter t0 (refer to equation (3)) has to be decided to solve equation (9). For this purpose, in the device according to the present embodiment, the values of t0 of several kinds to several tens of kinds, which are selected as explained later, are substituted for b1 and c1 in equation (3), and equation (9) is solved independently for respective values of t0; in the result, a gamma function is decided from K, $\alpha$, $\beta$ and t0 which make the square value sum E of the residuals minimum among all solutions for gamma fitting. How to select the several kinds to several tens of kinds of t0 values is shown in Fig. 8. A percentage value AP of measurement data for a peak value PV, and the number of times of repetition of fitting N are set beforehand. The measurement data (circle marks in the graph) of each slice are compared with the value (AP/100) x PV to find out a first slice of which measurement data become higher than (AP/100) x PV, and let T be the time of it. Let t0 be a value selected in the following equation and the gamma fitting of N times is performed.

$$t_0 = \Delta T \times j$$

where

$$\Delta T = T/N,$$

$$j = 0, 1, 2, \ldots N\text{-}1$$

In the result of gamma fitting of N times, a gamma function in which E becomes minimum is decided to be the one to be found.

The t0 decided as described above is positioned as shown in Fig. 8. Let I be a slice right after t0, then the data of slices before I - 1 are not used. They are not used for gamma fitting, however, they are used for the evaluation of the square value sum E of the residuals as shown in equation (10) to be able to perform correct evaluation for any t0.

$$E = \sum_{i=1}^{\ell-1} M_1{}^2 + \sum_{i=\ell}^{m} \{ (x + b_1 y + c_1 z - M_1) M_1{}' \}^2 \qquad \cdots (10)$$

In equation (10), the first term on the right side shows the slice data which are not used for gamma fitting, and the second term shows the slice data which are used for gamma fitting and the slice data from I to m are reflected in equation (9). The gamma function decision device 5, as described above, solves a normal equation in equation (9) for t0's of N times, and a gamma function to be found is decided by K,$\alpha$,$\beta$ and t0 when the square value sum E of the residuals become minimum.

A gamma fitting device as described above has advantages as shown in the following.

(1) Calculation quantity is decreased much and calculation time is shortened much in performing least square approximation by solving normal equations obtained through logarithmic transformation of measurement quantities.
(2) The gamma fitting equivalent to the gamma fitting in a real space can be performed by performing weighting in a logarithmic space, which makes it possible to improve the accuracy of gamma fitting.
(3) It becomes possible to perform accurate gamma fitting by original data by realizing the removal of disturbance.
(4) An optimum starting time of gamma fitting can be automatically decided by the decision method of t0 and the evaluation by equation (10).

A gamma fitting device is not limited to the above-mentioned embodiment. In the embodiment, explanation is given about the data, time and the increment of a CT number, however an arbitrary time serial data can be approximated by a gamma function. As an example of a weighting function, w (X) = X is adopted but another weighting function can be used.

An image processor using the gamma fitting device as mentioned above is constituted as shown in Fig. 2. In Fig. 2, 11 is the gamma fitting device which performs gamma fitting operation for each picture element of the picture element data of each tomograph image obtained in each slicing, and decides a gamma function which approximates most precisely to the time serial change of the picture data. A part 12 is a data control device which controls the gamma fitting device 11 to perform the operation for finding a gamma function fitted for respective picture element data based on the input data of scanned images; in the result, all the sets of parameters $K, \alpha, \beta$, and $t0$ which express gamma function curves of respective picture element data obtained from the gamma fitting device 11 are stored in the data control device by picture elements; and after that gamma function curves are reproduced by the above-mentioned parameters $K, \alpha, \beta$, and $t0$, and various kinds of computer image data such as a peak value and an area below a gamma function curve, to be described later, are operated. In the operation process of computer images as described in the above, if an excessive numerical value is generated and a picture element which may overflow is found, the operation will be suspended and a mark of operation suspension is stored in place of the picture element data. A part 13 is an interpolation device, and when it finds a mark of operation suspension in the input data from the data control device 12, re-search of image data is performed over the range of N x N matrix centering the picture element, and when there are found more than M effective data in the matrix of N x N, an average value of these effective data will be substituted for the mark of operation suspension to fill data blank, and when picture element data are completed, a computer image constituted by the data control device 12 is supplemented to be completed. By this arrangement, it is made possible to supplement smoothly the value of an incalculable picture element caused by overflow, etc. by interpolation from the circumference and to obtain a computer image of good picture quality and good to look at. A computer image output from the interpolation device is displayed in a display device (not shown in the drawing). The matrix size N and the number of data M shall be decided properly depending on the place of observation or the degree of a morbid state. The data control device 12 calculates various kinds of computer images, for example, as shown in the following which are specified beforehand based on the gamma fitting performed by the gamma fitting device 11.

(1) A peak value of a gamma function curve
(2) A period of time from the origin of the coordinate to the peak value
(3) An area below a curve
(4) inflection point width
(5) Time of appearance
(6) Mean passage time
(7) Corrected mean passage time
(8) Relative flow rate

The operation is suspended for a picture element of which overflow is brought about in the process of above-mentioned operation of computer images, and a mark expressing the suspension is given to the picture element. When the interpolation device 13 finds the mark, it tries to obtain an average value of more than M effective data out of N x N data in the vicinity of the mark for interpolation, and completes the operation of a computer image of which the operation is not completed including the interpolated data to display the image in a display device.

The explanation on a most preferred form for the execution of the present invention is given as described in the above, however it will be easy to make various transformation.

## Claims

1. Image processor provided with a gamma fitting means (11) for setting a gamma function curve approximating to a curve showing the movement of the contrast medium by a tomogram image obtained by a tomograph and for constituting various characteristics of the set gamma function curve with respect to a computer image, comprising: data clip means (1), logarithmic transformation means (2), weighting means (3), disturbance removal means (4) and function decision means (5) for setting an approximate gamma function curve,
    characterized in that

    the data clip means (1) performs a coordinate transformation of measurement data, whereby respective leading data which is the data just before the arrival of the contrast medium, are used as origin of a coordinate system based on time and X-ray transmission data, said data clip means shifts data being negative due to said coordinate transformation to positive data by replacing a negative value by a predefined positive value close to zero,
    the logarithmic transformation means (2) stores a 3 element first degree equation, a gamma function undergone logarithmic transformation, and substitutes the data from said data clip means (1) for the coefficients of said equation,

the weighting means (3) weights the output data of said logarithmic transformation means (2) to obtain gamma fitting which is not influenced by nonlinearity generated by logarithmic transformation,

the disturbance removal means (4) removes disturbance data to correct a disorder of a curve caused by disturbances, the correction is performed by determining final data which are finally used for gamma fitting, thereby refering to a preset value in correspondance with the peak value of measurement data,

the function decision means (5) inputs data from the disturbance removal means (4) and outputs parameters of a gamma function obtained by least square approximation, time offset calculation and not considering certain slice data.

2. Image processor according to claim 1, characterized by further comprising

a data control means (12) for forming a computer image based on a gamma function curve obtained by the calculation of gamma function decision parameters output from said fitting means (11) by controlling the operation of said gamma fitting means (11), and

an interpolation means (13) for completing a computer image by interpolating the picture elements in an incalculable part in the operation process by said data control means (12).

**Patentansprüche**

1. Bildprozessor, der mit einer Gammaanpassungseinrichtung (11) versehen ist, um eine Gammafunktionskurve einzustellen, die eine Kurve annähert, die die Bewegung eines Kontrastmediums durch ein Tomogrammbild zeigt, das durch einen Tomographen erhalten ist, und um verschiedene Kennlinien der eingestellten Gammafunktionskurve bezüglich eines Computerbildes zu erzeugen, mit einer Datenabschneideinrichtung (1), einer logarithmischen Transformationseinrichtung (2), einer Gewichtungseinrichtung (3), einer Störungsentfernungseinrichtung (4) und einer Funktionsentscheidungseinrichtung (5) zum Einstellen einer angenäherten Gammafunktionskurve,
    dadurch gekennzeichnet, daß

    die Datenabschneideinrichtung (1) eine Koordinatentransformation von Meßdaten durchführt, wodurch jeweilige Führungsdaten, die Daten gerade vor der Ankunft des Kontrastmediums sind, als Ursprung eines Koordinatensystems aufgrund einer Zeit und Röntgenübertragungsdaten verwendet werden, wobei die Datenabschneideinrichtung Daten, die aufgrund der Koordinatentransformation negativ sind, in positive Daten verschiebt, indem ein negativer Wert durch einen zuvor definierten positiven Wert nahe bei Null ersetzt wird,

    die logarithmische Transformationseinrichtung (2) eine Gleichung ersten Grades mit drei Elementen, eine Gammafunktion, die einer logarithmischen Transformation unterworfen ist, speichert und die Daten von der Datenabschneideinrichtung (1) für die Koeffizienten der Gleichung substituiert,

    die Gewichtungseinrichtung (3) die Ausgangsdaten der logarithmischen Transformationseinrichtung (2) gewichtet, um eine Gammaanpassung zu erhalten, die nicht durch eine Nichtlinearität beeinflußt ist, die durch die logarithmische Transformation erzeugt ist,

    die Störungsentfernungseinrichtung (4) Störungsdaten entfernt, um eine Fehlordnung einer Kurve infolge von Störungen zu korrigieren, wobei die Korrektur durchgeführt wird, indem Enddaten bestimmt werden, die schließlich für eine Gammaanpassung verwendet werden, um so auf einen voreingestellten Wert in Entsprechung mit dem Spitzenwert der Meßdaten Bezug zu nehmen,

    die Funktionsentscheidungseinrichtung (5) Daten von der Störungsentfernungseinrichtung (4) einspeist und Parameter der Gammafunktion ausgibt, die durch Annäherung der kleinsten Quadrate, Zeitversetzungsberechnung und Nicht-Berücksichtigung bestimmter Scheibendaten erhalten sind.

2. Bildprozessor nach Anspruch 1, gekennzeichnet durch weiterhin

    eine Datensteuereinrichtung (12) zum Erzeugen eines Computerbildes aufgrund einer Gammafunktionskurve, die erhalten ist durch die Berechnung von Gammafunktionsentscheidungsparametern, die von der Anpassungseinrichtung (11) ausgegeben sind, und durch Steuern des Betriebes der Gammaanpassungseinrichtung (11), und

    eine Interpolationseinrichtung (13) zum Vervollständigen eines Computerbildes durch Interpolieren der Bildelemente in einem unberechenbaren Teil in dem Operationsprozeß durch die Datensteuereinrichtung (12).

**Revendications**

1. Dispositif de traitement d'image doté d'un moyen d'ajustement de gamma (11) servant à fixer une courbe de la fonction de gamma qui approche une courbe représentant le mouvement du milieu de contraste à l'aide d'une image de tomogramme obtenue avec un tomographe et à constituer diverses caractéristiques de la courbe de la fonction de gamma fixée relativement à une image d'ordinateur, comprenant : un moyen (1) d'écrêtage de données, un moyen (2) de transformation logarithmique, un moyen (3) de pondération, un moyen (4) d'élimination de perturbations et un moyen (5) de prise de décision au sujet de la fonction qui sert à fixer une courbe approchée de la fonction de gamma,

   caractérisé en ce que :

   le moyen (1) d'écrêtage de données effectue une transformation de coordonnées sur les données de mesure, de sorte que des données de tête respectives, qui sont les données relatives à l'instant précédant juste l'arrivée du milieu de contraste, sont utilisées comme origine d'un système de coordonnées s'appuyant sur le temps et des données de transmission de rayons X, et ledit moyen d'écrêtage de données décale les données qui sont négatives du fait de ladite transformation de coordonnées pour en faire des données positives en remplaçant une valeur négative par une valeur positive prédéfinie proche de zéro,
   le moyen (2) de transformation logarithmique mémorise une équation du premier degré à trois éléments, une fonction de gamma ayant subi la transformation logarithmique, et substitue les données venant dudit moyen (1) d'écrêtage de données aux coefficients de ladite équation,
   le moyen de pondération (3) pondère les données de sortie dudit moyen (2) de transformation logarithmique afin d'obtenir un ajustement du gamma qui n'est pas influencé par la non-linéarité créée par la transformation logarithmique,
   le moyen (4) d'élimination de perturbations élimine les données de perturbations afin de corriger le désordre d'une courbe produit par des perturbations, et la correction est effectuée par détermination de données finales qui sont finalement utilisées pour l'ajustement du gamma, de manière à se reporter à une valeur préfixée qui est en correspondance avec la valeur de crête des données de mesure,
   le moyen (5) de prise de décision au sujet de la fonction reçoit en entrée des données de la part du moyen (4) d'élimination de perturbations et délivre des paramètres d'une fonction de gamma obtenus par un calcul de décalage de temps, avec une approximation des moindres carrés, sans considérer les données d'une certaine tranche.

2. Dispositif de traitement d'image selon la revendication 1, caractérisé en ce qu'il comprend en outre :

   un moyen (12) de commande de données servant à former une image d'ordinateur sur la base d'une courbe de la fonction de gamma obtenue par le calcul de paramètres de décision au sujet de la fonction de gamma qui sont délivrés par ledit moyen d'ajustement (11) du fait de la commande du fonctionnement dudit moyen d'ajustement de gamma (11), et
   un moyen d'interpolation (13) servant à réaliser une image d'ordinateur par interpolation des éléments d'image se trouvant dans une partie non calculable du processus de fonctionnement à l'aide dudit moyen de commande de données (12).

$F \, I \, G. \; 1$

MEASUREMENT DATA → DATA CLIP DEVICE (1) → LOGARITHMIC TRANSFORMATION DEVICE (2) → WEIGHTING DEVICE (3) → DISTURBANCE REMOVAL DEVICE (4) → GAMMA FUNCTION DECISION DEVICE (5) → $K, \alpha, \beta, t_0$

FIG. 2

FIG. 3

EP 0 422 220 B1

FIG. 4

FIG. 5

## FIG. 6

Y

$Y = \log X$

$\log X_0$ ---- $P(X_0, \log X_0)$

$X_0$        X

## FIG. 7

INCREMENT OF
CT NUMBER

PV

$\frac{RP}{100} \times PV$

m    m+1    p

n

1  2

$t_1$  $t_2$        $t_m$        $t_n$    t

FIG. 8